**Europäisches Patentamt**

**European Patent Office**

**Office européen des brevets**

(11) Publication number: **0 394 008 A2**

# EUROPEAN PATENT APPLICATION

(21) Application number: **90304133.3**

(51) Int. Cl.5: **H04N 5/783**

(22) Date of filing: **18.04.90**

(30) Priority: **21.04.89 GB 8909080**

(43) Date of publication of application:
**24.10.90 Bulletin 90/43**

(84) Designated Contracting States:
**AT BE CH DE DK ES FR GB GR IT LI LU NL SE**

(71) Applicant: **ABEKAS VIDEO SYSTEMS LIMITED**
**Portman House, 12 Portman Road**
**Reading, Berkshire RG13 1EA(GB)**

(72) Inventor: **Markle, Christopher Jhon**
**26 Willowgrove, Irvine**
**Califoria 9271X(US)**

(74) Representative: **Colgan, Stephen James et al**
**CARPMAELS & RANSFORD 43 Bloomsbury**
**Square**
**London WC1A 2RA(GB)**

(54) **Editing control system.**

(57) The editing control system can be used, for example, to transfer a frame sequence replayed from a source tape (VTR-A) into an editing gap on a recording tape (VTR-R). The source tape (VTR-A) is played at a constant speed which differs from the constant speed of the recording tape (VTR-R), these and speeds are maintained over a preroll period prior to the editing points. The speed of the source tape (VTR-A) is adjusted so that the duration of the required frame sequence fits exactly into the editing gap, e.g., the source tape is played in slow motion. The durations of each tape over the preroll period constitute a ratio for controlling the speed of the source tape (VTR-A) and sampling is carried out in order to correct the source tape speed so that the editing points arrive coincidentally at the start of information transfer. Frame positional information and programming sequences are illustrated on a display (9) and a control panel (10) is used to operate the system.

FIG. 1

EP 0 394 008 A2

## EDITING CONTROL SYSTEM

This invention relates to a control system for use in editing information on a record carrier such as a magnetic tape or disc. In particular, the invention may be used for transferring information from a source video tape onto a recording video tape. Although the invention will be described in connection with video tape recording, it will be understood that its principles can be applied to similar fields of use where information is recorded on a tape or disc. A particular application of the invention, in the VTR field, is to transfer information at a predetermined tape speed from a predetermined editing point on a source tape to and beyond a predetermined editing point on a recording tape running at a different speed. This is useful where, for example, the source information is played at a slower speed onto the recording tape in the manner of a slow motion sequence. However, the speed at which the information is recorded may be faster, rather than slower than the speed at which the source information was originally recorded.

The problem of transferring information from a source tape to a recording tape at a different speed and precisely at the correct editing point has been a long-standing one. According to conventional practice, the source tape is run up to its normal speed and is then decelerated after passing a cue point so that the speed of source tape ramps down to a required speed at an eventual editing point. In theory, the source tape speed can be reduced to a predetermined value in view of a predetermined rate of deceleration so that editing points on the source and recording tapes coincide. However, for various reasons, this is not the case in practice. For example, when tape drives are started up in either a recording or replay mode, a certain interval of time is required for the servo-controlled mechanisms to control the speeds of the tape transport motors before achieving the standard frame frequency. Known control systems employ feedback to compare rotation frequency with field synchronisation pulses in order to derive error correction signals for speeding up or slowing down the servo-controlled mechanisms. Clearly, some time is required to achieve a stable frame synchronised frequency and the time taken will vary from recorder to recorder and also with the operating condition of the mechanism, ambient conditions and so on. These factors generally lead to recording errors when trying to make the editing points coincide when using conventional editing techniques.

The present invention seeks to solve this problem by providing an editing control system for operation with first and second recording/replay devices, said devices including first and second transport mechanism for transporting respective first and second record carriers, and first and second scanning heads for recording on, or replaying information from, the respective first and second record carriers; the editing control system comprising:

(a) memory means for storing data representing at least one editing point on each of the first and second record carriers; and

(b) processing means for providing control signals for the first recording/replay device so that the first carrier is transported at a different constant speed to the second carrier, the processing means being conditioned to monitor data relating to instantaneous replay positions of information on the first and second record carriers and to provide data representing the relationship between those positions, said data being processed to provide said control signals whereby the speed of the first transport mechanism is controlled to ensure that both record carriers arrive at their editing points coincidentally and whereby information is transferred from the first carrier to the second record carrier at the coincident editing points.

One advantage of the invention is that, for example, a source tape can run at a different constant speed (e.g. slower so as to provide a slow motion sequence) before the editing points are reached on both tapes. This avoids changing the speed of the source tape just before the editing point is reached and this substantially eliminates the recording errors mentioned above.

A further advantage of the invention is that by selecting the predetermined relationship between the transport speeds, a source tape, for example, can be run at just the required speed to "fill a gap" in a recording tape. Thus, if the gap to be filled on the recording tape requires an information sequence having a duration of X seconds, then the speed of source tape can be adjusted so that a sequence of information lasts for the same duration of X seconds rather than Y seconds at its original recording speed. This may involve reducing, or speeding up source tape speed so as to provide the correct number of frames within the duration of the gap of the recording tape.

The accuracy of monitoring the instantaneous replay positions of the information on the first and second record carriers can be ensured by sampling the recorded information at the frame frequency and by multiplying by a scaling factor of a higher order (e.g. a 1000). This enables more accurate monitoring and hence avoids rounding errors which could otherwise lead to an error of plus or minus one frame. In practice, unique bit codes on each frame (e.g. on the sound stripe) can be used to identify an instantaneous position of a frame and this is done also in conventional equipment. However, conventional equipment does not employ wholly constant transport speeds prior to editing.

An embodiment of the invention will now be described with reference to the accompanying schematic drawings, in which:

Figure 1 is a block diagram of an editing control system in accordance with the invention connected into video tape recorders,

Figure 2 shows a control panel which is part of the editing control system of Figure 1,

Figure 3 illustrates a display used in the editing control system of Figure 1, and

Figures 4a-4g are flow diagrams illustrating techniques employed by the invention.

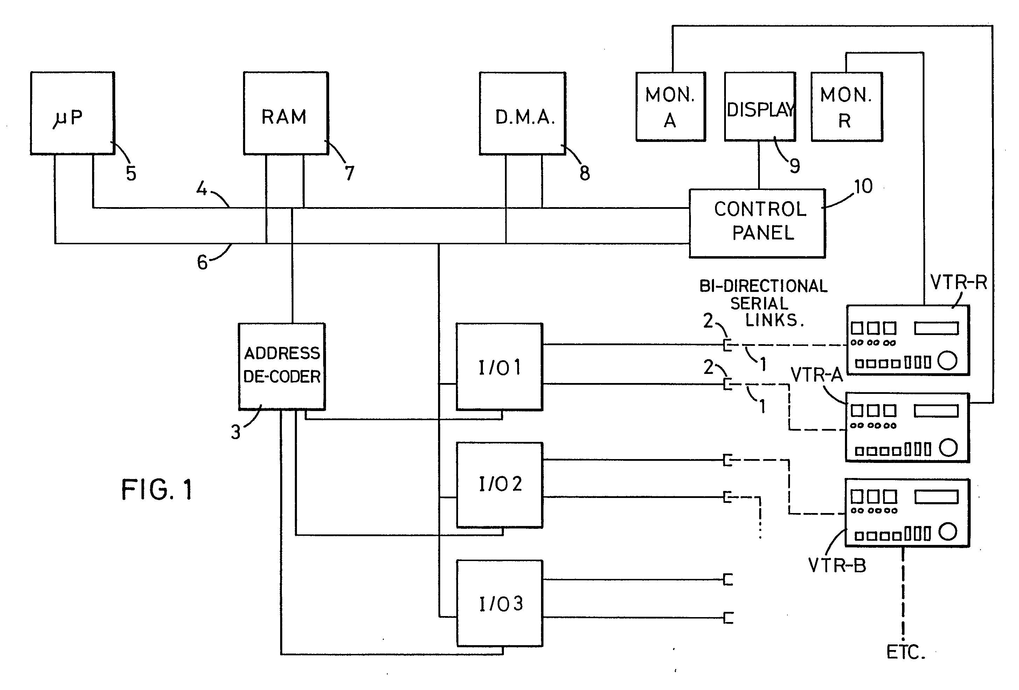

Figure 1 shows the general layout of an editing system which incorporates a control embodying the invention. The editing system comprises video tape recorders VTR-R, VTR-A, VTR-B,... each connected to a respective monitor M; several VTR's being shown since it is usual practice to have more than one source tape available when editing. Each VTR is connected to a respective monitor MON-R, MON-A, MON-B ... and each VTR has bi-directional serial links 1 connected to a corresponding one of six ports 2 of a serial input/output device I/01, I/02, I/03. Each of the latter devices is connected to an address decoder 3 which is connected to a 24 line address bus 4. Control signals initiated by a microprocessor 5 and stored in memory (7, 8) can therefore be decoded and supplied to the respective input/output device and hence the respective VTR. Each serial input/out device also has an output connected to a 16 line data bus 6 whereby information representing the status of servo-mechanisms in each VTR can be converted from analog to digital form and then processed and stored in memory. The memory includes RAM 7 (with some PROM) and direct memory access 8. Buses 4 and 6 are also connected to a display 9 and a control panel 10. Microprocessor 5 is programmed to perform control functions which will be described below.

It may be assumed that VTR-R is a recording machine onto which source material needs to be transferred from VTR-A. However, the VTR's may have interchangeable roles and they may be used in different combinations. The serial input/output devices communicate with (sensors not shown) in the VTR's to provide the information relating to the status of their servo-mechanisms. They also communicate with the scanning heads to provide data which represents the instantaneous frame position of the scanned tapes. This frame position is provided (as is conventional) by reading a unique code on each frame during scanning. The frame codes are processed along with a timing signal (e.g., derived from the frame frequency of VTR-R or from a master clock) to enable the microprocessor 5 to determine accurately the instantaneous replay positions in VTR-R and VTR-A and to generate an error correction signal which is applied to VTR-A to ensure that editing points on each tape arrive coincidentally. The microprocessor 5 provides a digital value which is converted by the serial input/output devices into a servo-control correction signal whereby the motor speed in VTR-A is adjusted and controlled. (Whilst the servo-controls in VTR-R and VTR-A usually ensure constant speed, the servo-control in VTR-A requires an error correction signal because neither of the two servo-controls are sufficiently accurate to rely on a particular frame arriving at a particular time.) The conversion of analog signals into digital signals and the principle of servo-control will be sufficiently well known to those skilled in the art to require no further detailed explanation.

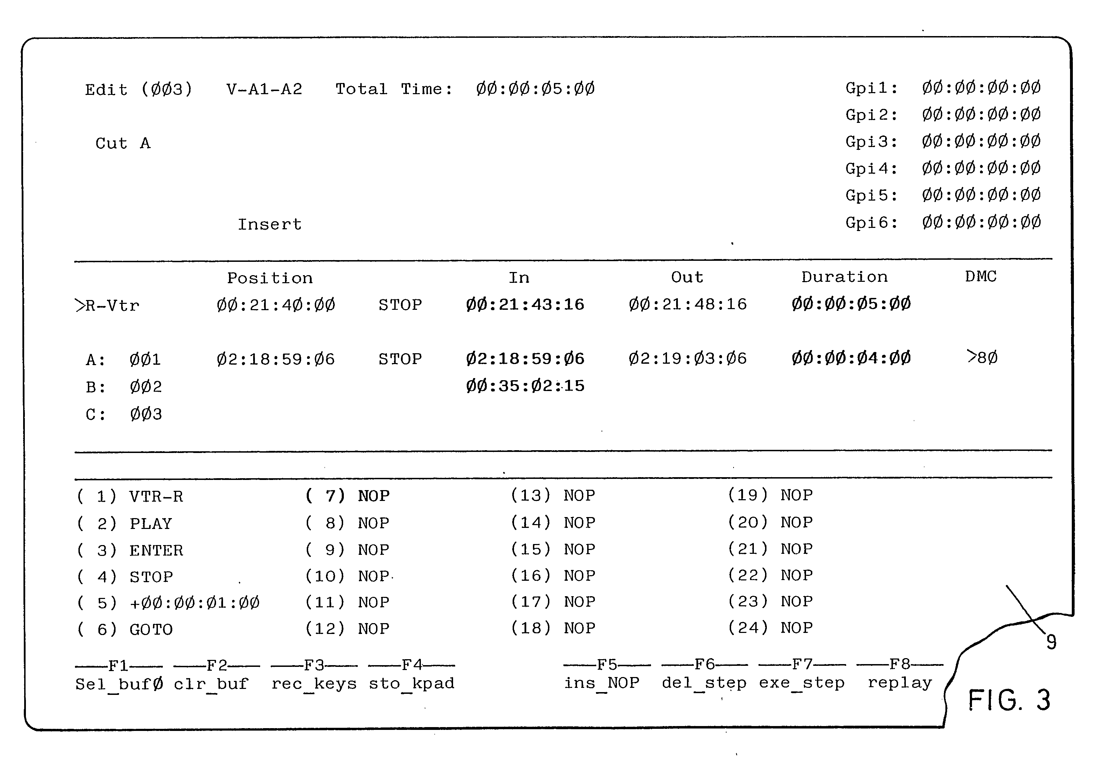

Display 9 has a screen on which is indicated a selected read-out of control functions for editing. Other functions may alternatively be displayed. Fig. 3 shows the editing display, the number "003" indicating that it is No. 3 of various display modes. "Total Time" shows that 5.00 seconds of source tape information (VTR-A) is available for transfer to the recording tape (VTR-R). Legends "Gpi1, Gpi2 ..." can be used to indicate a series of general purpose intervals (i.e. timing positions at which a signal is generated for turning something on or off). The "Insert" region indicates the frame replay positions of the information on the recording and source tapes. Current input data for these positions is highly illuminated and this is depicted by the bold type in the display of Fig. 3.

The symbol ">R-Vtr" refers to VTR-R on which the instantaneous frame position is "00:21:40:00". This refers to 21 minutes 40 seconds and 00 frame (i.e. the latter two digits change between 0 and 25 corresponding to a frame frequency of 25 per second). Usually, after switching on VTR-R, the tape speed is allowed to reach a constant level well before an editing point at 00:21:43:16. In this instance, the recording tape has previously been advanced so as to record start and finish editing points of an editing gap, these points occurring at positions "00:21:43:16" (under "In") and "00:21:48:16" (under "Out"). The duration of the gap is 5.00 seconds so that VTR-R can record information for this period in the editing gap.

The source tape A, on VTR-A, is similarly at an instantaneous replay position of "02:18:59:06" and its editing positions are at "02:18:59:06" and "02:19:03:06", a duration of 4.00 seconds. Although the duration of the source information available for transfer is 4.00 seconds, if the source tape were played at 80% of its original speed (noted under "DMC" as ">80"), then the duration would be 5 seconds and this would exactly match the editing gap in the recording tape.

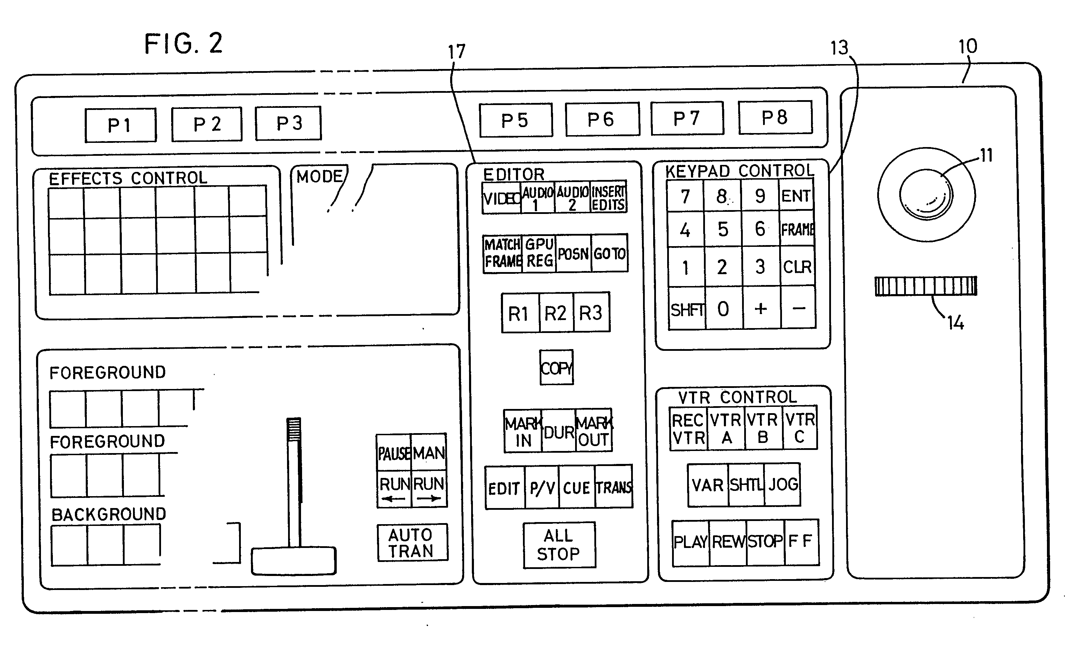

Turning now to Figure 2, a control panel 10 is shown on which there are various controls for producing, for example, special effects as well as editing video tape. Only those controls of immediate interest to the present invention will now be described.

VTR control buttons marked "REC VTR; VTR A; VTR B; and VTR C" are provided for selecting the respective video recorders. One or more of these buttons may be pressed and the selected recorder is then controlled by the conventional push buttons marked "PLAY, REW, STOP, FF". The push button marked "VAR" is depressed in order to enable a joy-stick 11 to be used for selecting a different tape speed than is normal. The joy-stick 11 can be moved to drive the tape faster or slower whilst the picture information is viewed on the monitor and the tape position is viewed on display 9. The push button marked "SHTTL" is depressed for advancing or reversing the tape at a faster speed. The "JOG" button is depressed to advance or reverse the tape by one frame at a time only. A thumb wheel 14 enables the tape to be advanced or reversed manually, i.e. by one or more frames as required.

A sub-control panel 17 marked "EDITOR" includes several rows of buttons, only some of which will be described with regard to the invention and such description will be clearer with regard to the following examples of editing.

An EDITOR button (not shown) is depressed to bring up the editing display (Fig. 3) on display 9. Assuming that REC VTR is depressed, the recording tape is played and advanced or reversed to position a required editing point (00:21:43:16) so that the last frame on the tape before a gap is displayed on monitor MON-R. At this points "MARK IN" is depressed to enter the editing position under "In" on the display 9. "MARK IN" is then released and the tape is advanced and positioned, until monitor MON-R displays the first frame of recorded information following the editing gap. At this point, "MARK OUT" is depressed to enter the tape position under "Out" on display 9. The tape is then reversed back to a point before the "In" position at the start of the editing gap and the current position of the tape will be displayed under "Position" on display 9.

After releasing the REC VTR button and depressing VTR-A the same process is repeated for VTR-A whilst viewing the source information played back on MON-A.

In both cases, the "Duration" of the information on the tape is indicated on display 9 after depressing DUR (as shown in Fig. 3). The ratio of the two Durations is then automatically calculated and indicated on the display under "DMC". In the particular case shown in Fig. 3, the ratio is 80% because the speed of the source tape needs to be slowed down by a factor of 80% in order to last for 5 seconds which is the length of the editing gap.

(Alternatively, speeds may be manually controlled by depressing the DUR button and then selecting a required duration by entering digits from the KEY PAD CONTROL 13.)

If the GO TO button is depressed, a required tape position can be typed in by entering the appropriate data from the KEYPAD CONTROL 13. This enables a particular frame number to be located automatically i.e. by advancing or reversing the tape drive and stopping at the chosen frame.

Assuming that microprocessor 5 has been programmed and that the required frame positions have been entered, both the recording VTR-R and the source VTR-A are run back to positions well before the first editing points. Such positions enable the tape transport mechanisms in both VTRs to achieve constant tape transport speeds prior to editing. The amount of tape run back is called to "preroll" as will be apparent from the description of the flowcharts given below. Then, with both REC VTR and VTR A depressed, the EDIT button is depressed to cause the editing sequence to take place automatically. The source tape is thereby replayed at the slower speed to fill the editing gap. Both VTR's can be stopped at any time by depressing ALL STOP.

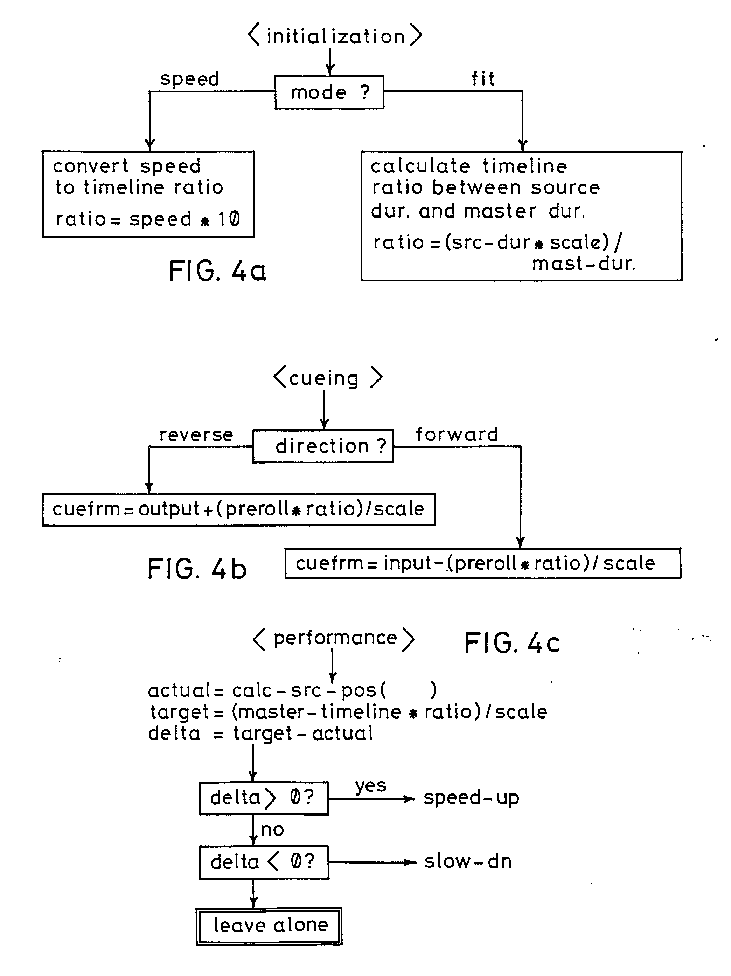

Turning now to the flowcharts of Figs. 4a-4g, a description will now be given of sub-routines programmed into microprocessor 5 to cause it to operate in the manner described above.

Fig. 4a is an "initialisation" sub-routine in which a "ratio" is calculated, for example, that shown as 80% DMC in display 9. However, a "mode" decision is first taken depending on whether a longer duration sequence needs to be "fitted" into a shorter duration gap, or only the "speed" needs to be adjusted, e.g. to play a slow motion sequence which does not require a fixed duration. In the case of "fit", the "timeline ratio" is calculated as a quotient of "source" duration and "master" duration (which are the respective durations of the source and recording tapes of VTR-A and VTR-R respectively). A scaling factor "scale" is applied in order to improve accuracy (see below). In the case of "speed" the timeline ratio is calculated by simply multiplying the speed of the source tape by a percentage factor (shown here as 10%).

Fig. 4b shows a "cueing" sub-routine which first involves a decision concerning whether the tape is being cued in a "reverse" or "forward" direction. It will be appreciated that the tape (source or master) will be transported from a frame position remote from a cueing frame at which the transfer of information takes place. The amount that the tape is transported from a start frame position to the cueing frame position is known as the "preroll" and this is usually a fixed amount of time, such as 5 seconds. The preroll duration represents the timeline in terms of the transport speed of the master tape (VTR-R), although the preroll could be referenced to real time on a master clock. If the tape is cued in the forward direction, a frame count-down occurs from the start position to the cueing frame. The cueing frame may be the "input" frame of an editing gap. Thus, the cueing frame countdown is given by subtracting from the input frame position the "preroll" duration multiplied by the "ratio" obtained from the "initialisation" sub-routine. The count-down occurs until the cueing frame position is zero (which corresponds with the input frame position). However, the "scale" factor is applied in order to sub-divide the frame position data, e.g. by a factor of 1000, to improve the accuracy of resolution and hence avoid rounding errors which could otherwise lead to an editing inaccuracy of plus or minus one frame. The same process applies when cueing in the reverse direction except that the tape starts from an "output" frame position (which is the last empty frame position in the editing gap) and a plus sign replaces the minus sign (because the output frame would need to be cued in the reverse direction).

Fig. 4c shows a "performance" sub-routine. This involves dynamic calculations for controlling the speed of the source tape during the "preroll" period so that the input frames on both tapes arrive coincidentally at the first editing point (i.e. the start of the editing gap). Microprocessor 5 computes the "actual" position of the source tape (VTR-A) and its "target" position which is where the source tape should be at the same instant of time. It then computes "delta" which is the target position minus the actual position. If "delta" exceeds zero, the servo-mechanism of the tape drive in VTR-A receives a "speed-up" signal. If delta is less than zero, a "slow down" signal is received. If delta equals zero, the servo-mechanism is left alone.

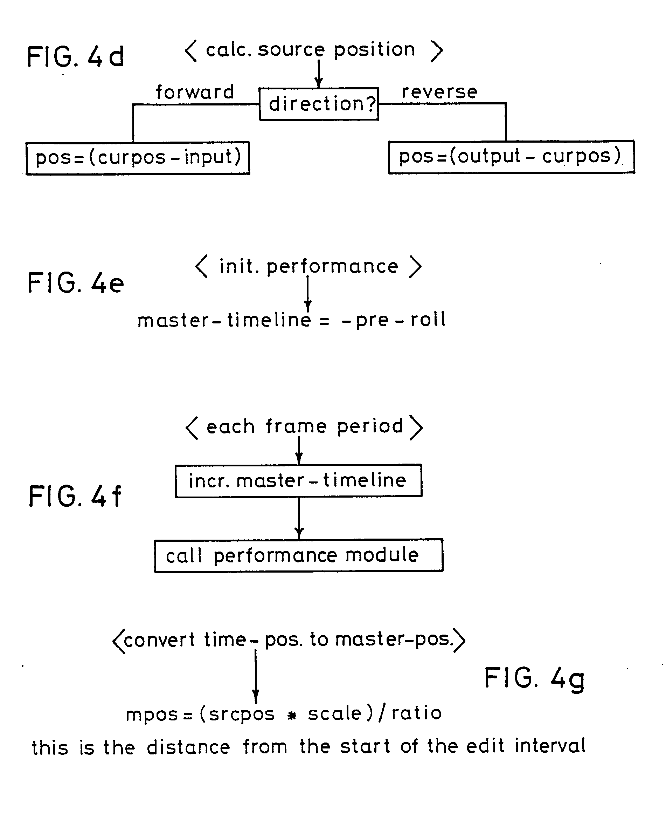

The "actual" position is shown as "calculate source position ( )" and this is explained as illustrated in the sub-routine of Fig. 4d. The "target" position is calculated with respect to the instantaneous frame position on the "master" tape (or from a standard clock position) minus the timeline or duration of the master tape multiplied by the ratio obtained from the initialisation sub-routine. The same scaling factor is also applied, e.g. of the order of 1000, to improve the accuracy of determining the instantaneous frame position.

Fig. 4d shows a sub-routine for "calculating source position". A decision is first taken as to the direction of tape movement. In the "forward" direction, the position is given by the "input" frame position (at the start of the editing gap) minus the current frame position. This is shown in reverse in Fig. 4d to provide a negative value. In other words, the source position is calculated as an decreasing frame count which approaches the "input" frame position. The "reverse" tape direction is clearly the converse of this.

Fig. 4e shows an "initiate performance" sub-routine which simply equates "master timeline" with a negative value of preroll prior to starting the "performance " sub-routine.

Fig. 4f shows a sub-routine for "each frame period" wherein the master timeline is incremented as each frame is counted in order to provide a time base for the calculation. After each increment, the "performance" sub-routine of Fig. 4c is requested in order to compute the error "delta".

Fig. 4g shows a sub-routine for converting a "time position" to a "master position". This sub-routine would be used, for example, where it is necessary for the servo-mechanism of the source tape drive to receive a signal from the editing control system in order to run in slow motion and at the required constant speed for fitting the slow motion sequence into a longer editing gap. This sub-routine illustrates the difference between the conventional technique of simply memorising a cueing frame and then depending on a predetermined tape deceleration, compared with the invention in which a speed ratio is calculated for adjusting the speed of the source tape to a constant value prior to editing. The master position is given by the instantaneous source tape position divided by the "ratio" from the "initialisation" sub-routine and multiplied by the scaling factor to improve the accuracy of position determination. The master position is the distance from the start of an editing gap to the instantaneous frame position on the recording tape (VTR-R).

## Claims

1. An editing control system for operation with first and second recording/replay devices, said devices including first and second transport mechanisms for transporting respective first and second recording carriers, and first and second scanning heads for recording on, or replaying information from, the respective first and second record carriers; the editing control system comprising:

(a) memory means for storing data representing at least one editing point on each of the first and second record carriers; and

(b) processing means for providing control signals for the first recording/replay device so that the first carrier is transported at a different constant speed to the second carrier, the processing means being conditioned to monitor data relating to instantaneous replay position of information on the first and second record carriers and to provide data representing the relationship between those positions, said data being processed to provide said control signals whereby the speed of the first transport mechanism is controlled to ensure that both record carriers arrive at their editing points coincidentally and whereby information is transferred from the first carrier to the second carrier at the coincident editing points.

2. A system according to claim 1 wherein the replay position of information on at least the first record carrier is scaled by a factor to improve the accuracy of determining the replay position.

3. A system according to claim 1 or 2 and further comprising a control panel having at least one control which, when actuated, causes a value to be calculated which represents a ratio of the duration of a sequence of information on the first record carrier and a different duration on the second record carrier, the ratio being calculated as part of said processing and being used to derive a signal for adjusting the speed of said first recording/replay device.

4. A system according to claim 3 in which the control means further includes a control which, when actuated, provide data representing instantaneous replay positions of the first and second record carriers whereby the positions of said editing points is stored in said memory means, the system further including display means for displaying said data.

5. A system according to claim 4 wherein the processing means provides an output to cause the display means to display the steps of a programmed sequence of operation, the control means including a keyboard for accessing each of said steps.

6. A VTR recording system comprising:
(a) first and second VTR's,
(b) first and second serial input/output devices connected to said VTR's,
(c) an address decoder connected to said serial input/output devices,
(d) a microprocessor connected to address and data buses, said address decoder being connected to said address bus,
(e) memory means connected to said address and data buses,
(f) display means connected to said address and data buses,
(g) monitoring means connected to each of said VTRs, and

(h) a control panel connected to said address and data buses,
said microprocessor being programmed such that frame positions on a source tape transported by the first VTR and on a recording tape transported by the second VTR can be memorised and displayed as instantaneous frame positions whereby the positions of predetermined first and second editing points, representing the durations of an editing gap on the recording tape and a required frame sequence on the source tape, can be monitored and displayed; said microprocessor also being programmed to calculate a ratio of said durations and to derive thereby a servo-control correction signal for adjusting the speed of the first VTR to a constant value at which said frame sequence will precisely fit said editing gap; and said processor being further programmed to sample the frame positions when said source tape and said recording tape are driven at constant speeds prior to reaching the first editing points so as to derive the servo-control correction signal whereby the speed of the first VTR is controlled so that said editing points are reached coincidentally and said frame sequence is transferred into said editing gap.

FIG. 1

μP

RAM

D.M.A.

MON. A

DISPLAY

MON. R

5

4

7

8

9

10

6

CONTROL PANEL

ADDRESS DE-CODER

3

I/O 1

I/O 2

I/O 3

BI-DIRECTIONAL SERIAL LINKS.

2

2

1

1

VTR-R

VTR-A

VTR-B

ETC.

EP 0 394 008 A2

# FIG. 2

EP 0 394 008 A2

```
Edit (ØØ3)    V-A1-A2    Total Time:   ØØ:ØØ:Ø5:ØØ                          Gpi1:   ØØ:ØØ:ØØ:ØØ
                                                                           Gpi2:   ØØ:ØØ:ØØ:ØØ
   Cut A                                                                    Gpi3:   ØØ:ØØ:ØØ:ØØ
                                                                           Gpi4:   ØØ:ØØ:ØØ:ØØ
                                                                           Gpi5:   ØØ:ØØ:ØØ:ØØ
                    Insert                                                  Gpi6:   ØØ:ØØ:ØØ:ØØ
```

| | Position | | In | Out | Duration | DMC |
|---|---|---|---|---|---|---|
| >R-Vtr | ØØ:21:4Ø:ØØ | STOP | ØØ:21:43:16 | ØØ:21:48:16 | ØØ:ØØ:Ø5:ØØ | |
| A:   ØØ1 | Ø2:18:59:Ø6 | STOP | Ø2:18:59:Ø6 | Ø2:19:Ø3:Ø6 | ØØ:ØØ:Ø4:ØØ | >8Ø |
| B:   ØØ2 | | | ØØ:35:Ø2:15 | | | |
| C:   ØØ3 | | | | | | |

```
( 1) VTR-R         ( 7) NOP        (13) NOP            (19) NOP
( 2) PLAY          ( 8) NOP        (14) NOP            (20) NOP
( 3) ENTER         ( 9) NOP        (15) NOP            (21) NOP
( 4) STOP          (10) NOP·       (16) NOP            (22) NOP
( 5) +ØØ:ØØ:Ø1:ØØ  (11) NOP        (17) NOP            (23) NOP
( 6) GOTO          (12) NOP        (18) NOP            (24) NOP
```

```
——F1——  ——F2——   ——F3——   ——F4——        ——F5——   ——F6——   ——F7——  ——F8——
Sel_bufØ clr_buf  rec_keys sto_kpad       ins_NOP  del_step exe_step replay
```

FIG. 3

⟨ initialization ⟩

speed     mode ?     fit

convert speed
to timeline ratio

ratio = speed * 10

## FIG. 4a

calculate timeline
ratio between source
dur. and master dur.

ratio = (src-dur * scale) /
              mast-dur.

⟨ cueing ⟩

reverse     direction ?     forward

cuefrm = output + (preroll * ratio)/scale

## FIG. 4b

cuefrm = input - (preroll * ratio)/ scale

⟨ performance ⟩     FIG. 4c

actual = calc - src - pos (      )
target = (master - timeline * ratio) / scale
delta = target - actual

delta > 0?    yes  → speed-up

↓ no

delta < 0?     → slow-dn

leave alone

FIG. 4d    ⟨ calc. source position ⟩

forward    | direction? |    reverse

| pos = (curpos – input) |    | pos = (output – curpos) |


FIG. 4e    ⟨ init. performance ⟩

master – timeline = – pre – roll


⟨ each frame period ⟩

FIG. 4f    | incr. master – timeline |

| call performance module |


⟨convert time – pos. to master-pos.⟩

FIG. 4g

mpos = (srcpos ∗ scale) / ratio

this is the distance from the start of the edit interval